# EUROPEAN PATENT APPLICATION

(11) **EP 3 017 964 A1**
(43) Date of publication of application: **11.05.2016**
(21) Application number: 15192343.0
(22) Date of filing: 30.10.2015
(51) Int. Cl.: B60C 11/03, B60C 11/13, B60C 11/12

(54) **AN IMPROVED TREAD FOR A SNOW TIRE**

(30) Priority: 04.11.2014 US 201414532303
(71) Applicant: The Goodyear Tire & Rubber Company, Akron, Ohio 44316 (US)
(72) Inventor: SKURICH, Michael Stefan, Canton, OH Ohio 44718 (US); UMSTOT, Dale Edward, Atwater, OH Ohio 44201 (US); SMESKO, Kenneth William, Uniontown, OH Ohio 44685 (US); CHO, Jung Wan, L-1780 Luxembourg-Cessange (LU); MURPHY, Darin Andrew, Canton, OH Ohio 44721 (US); OBERLIN, Daniel Glenn, Marshallville, OH Ohio 44645 (US); WIELAND, Richard Mark, Akron, OH Ohio 44319 (US)
(74) Representative: Kutsch, Bernd

(57) **Abstract**

A pneumatic tire is disclosed having a radially outer tread (700, 800, 900). The tread has a plurality of circumferential grooves (710, 910), a plurality of lateral grooves (720, 820), and a plurality of shoulder grooves (730, 830). The bottom and the sides, only the bottom or only the sides of each circumferential groove (710, 910) are textured. Furthermore, the bottom and the sides, only the bottom or only the sides of each lateral groove (720, 820) are textured and the bottom and the sides, only the bottom or only the sides of each shoulder groove (730, 830) are textured.

## Description

### Field of the Invention

The present invention generally relates to tread patterns for pneumatic passenger or light truck tires, and, particularly, to a tread for enhancing snow traction.

### Background of the Invention

A pneumatic tire includes a ground contacting portion or tread, the tread having a pattern designed to provide the tire with a desirable combination of traction, durability, ride comfort, and quiet operation. It is also desirable that the tread pattern provide the tire with an all-weather capability or a set of characteristics providing adequate performance under a variety of adverse road conditions including dry, snow, ice, rain, and mud.

The all season tire has been introduced by The Goodyear Tire and Rubber Company many decades ago and was defined by lateral extending grooves open to the side of the tread. These lateral extending grooves were oriented perpendicular to the direction of travel for at least 1.27 cm (0.5 inch) and a width of at least 1.54 mm (0.06 inch) from the open shoulder laterally inward and provided a huge improvement in snow traction.

Tire tread patterns designed for traction on wet surfaces, snow, and ice often feature a block type tread pattern. A block type tread pattern is characterized by a plurality of main grooves extending in a circumferential direction and a number of lateral grooves extending in a more or less axial direction. The areas of the tread between the circumferential and lateral grooves are referred to a tread blocks. Tread blocks may also be defined by the edges of the tread and by grooves having other orientations. In comparison, a rib-type tread pattern may be characterized primarily by circumferential grooves separating circumferentially continuous ribs. Tread designs may also combine rib and block patterns.

The use of blocks as elements of a tread pattern tends to increase the level of noise generated by such tires, as compared to rib-type tires. Such blocks may also produce irregular wear due to their lack of stiffness in the circumferential direction of the tread. It is known in pneumatic tires having a block tread pattern that normal operation of the tire produces uneven wear of the tread blocks called heel-and-toe wear. In heel-and-toe wear, the rate of wear at the toe or trailing edge of the blocks may exceed the rate of wear at the heel or leading edge of the blocks. In normal operation, the heel of each block strikes the pavement first followed by the toe. Similarly the heel of each block may be lifted first from its contact with the pavement followed by the toe. In addition to reduced tread life, irregular and heel-and-toe wear may increase the level of noise generated by operation of the tire. Also, the cornering and braking performance of a tire with irregular and/or heel-and-toe wear may be degraded.

Heel-and-toe wear may be suppressed by providing a narrow tread block axially outside each block. The narrow block may have a surface formed to be a circular arc by setting both end parts of the narrow block lower than the adjacent tread block by 1.5 to 2.5 mm.

To balance the rate of heel and toe wear, the leading edge or heel of one or more blocks may have one or more notches with a variable width in the axial direction. The width may generally decrease from a maximum at the heel to a minimum in the direction of the toe. The notches may provide the tread blocks with a variable net to gross where the net to gross increases from the heel to the toe of the blocks.

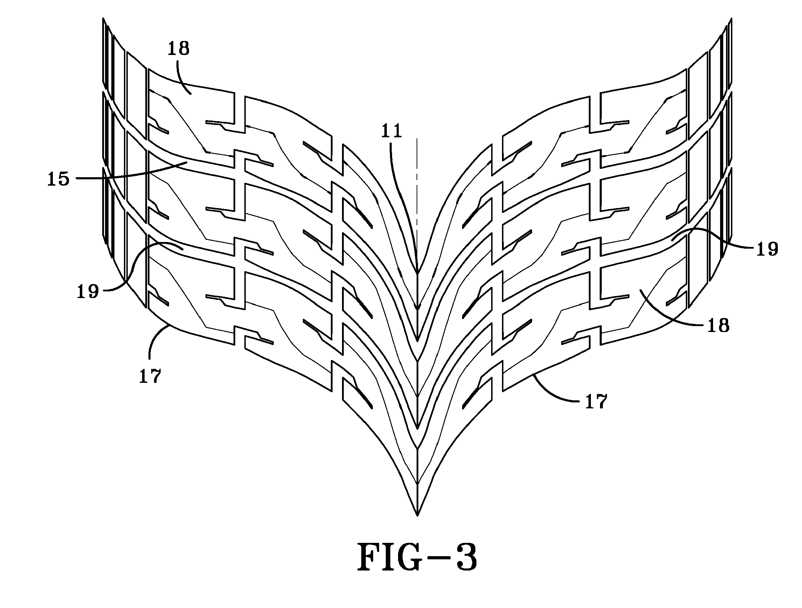

An "aqua-channel" large circumferential groove with a width 7 to 12 percent of the tread width combined with a network of generally curved inclined lateral grooves flowing over the tread shoulders may also greatly enhance wet traction. As shown in Fig. 3, the aqua-channel may be connected to curved lateral grooves and water may be directed into a large groove and into the lateral grooves to be expelled through a channel or through the lateral grooves.

These directional treads should not have the lateral grooves oriented such that water is directed to the center of the tread. Therefore, the orientation is such that the axially inner portions of a lateral groove and the leading edges and trailing edges of the tread elements must enter the footprint or contact patch prior to the axially outer portions. Accordingly, any inclination other than 90 degrees may be inclined or sloped away from the contact patch as the grooves extend axially outwardly. These constructions have been found to contribute to irregular heel toe wear in shoulder block elements. This irregular wear may be exaggerated or reduced depending on the shape of the tire's footprint or contact patch shape.

Another tread pattern may produce a footprint shape which, regardless of load, may operate in a range of footprint shape factors that permit tire treads to be optimized thereby omitting tire rotation requirements. A tire's footprint may thus be measured and a footprint shape factor (FSF) may be calculated. To measure the footprint shape, a tire may be inked and pressed against a paper or a cardboard sheet or laid on a flat hard surface at a fixed load with the tire inflated at a fixed pressure leaving the impression of the tread on the paper or cardboard surface. Alternatively, inkless procedures may include carbonless paper, pressure sensing pads, and the like. In all cases, the objective is to define tread contacting surfaces within the footprint.

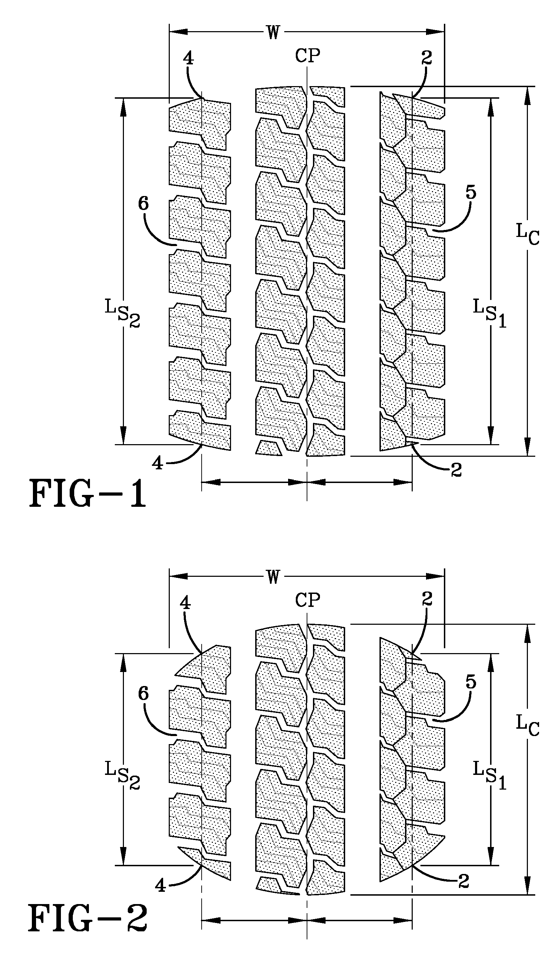

Conventionally, a butterfly shaped footprint has been undesirable. Alternatively, a footprint having a shape similar to the bow of a boat has been desirable for pushing water away from the center of the tread. As shown in FIGS. 1 and 2, conventional tires may exhibit this bow shaped of footprint.

Inherently, when the leading and trailing edges of the footprint are not axially extending (e.g., curved or bowed), as the tire rolls, a portion of the tread contacts the ground first and laterally adjacent tread elements follow. This may cause a phenomenon known as "tread element squirm." As the tread elements leave the treads footprint, the elements snap out of the contact patch as the pressure holding the element against the road is released. The elements lightly contacting the road are slid across the roadway wearing the element similar to sliding rubber eraser across a sheet of paper. These tread elements may have a uniform pressure distribution laterally across the tread and, more particularly, the leading and trailing edges of the footprint may be axially extending in a straight line path under all operating conditions.

A concept and methodology to define a footprint shape factor F is shown in prior art Figs. 1 and 2. First, the maximum axial width W of the footprint is measured. Then, the distance halfway between the maximum axial width W is defined as the tire's center plane CP. A distance 40% of the tread width (W) on each side of the center plane may be located as shown as reference numerals 2, 4. A circumferential line 5, 6 may be drawn through points 2--2 and 4-4, respectively, and the lengths of lines L_{S1} and L_{S2} may be calculated, summed, and divided by 2 to arrive at an average shoulder length A. The footprint length Lc at the center plane may be measured. The footprint shape factor F is the ratio of Lc /Ls. The footprint shape factor F of Figs. 1 and 2 may be 1.12 at normal inflation and 100% load at a fixed pressure. At 50% load, the footprint shape factor F may be 1.50 at the fixed pressure. As shown, the footprint's shape may be very different at these different loads. In light truck tires, this variation in loading may be a greater challenge than in passenger tires.

An improvement in irregular tread wear has been be achieved by using lateral groove orientations that completely go against the conventional construction discussed above. Further, studies have confirmed the use of this tread pattern design while reducing heel toe wear dramatically in the shoulder tread elements thereby mitigating degradation in wet and/or dry traction performance.

A pneumatic passenger or light truck tire having a radially outer tread may have a plurality of tread elements defined by grooves arranged circumferentially and laterally around the tread between a pair of lateral tread edges to define a tread pattern. A plurality of tread elements may extend across the width of the tread between the lateral edges, including central tread elements and shoulder tread elements having leading and trailing tread edges. The shoulder tread elements may be arranged in two rows, one row adjacent each lateral edge. At least one row of shoulder elements may have the leading edges inclined relative to the direction of rotation of the tire having an axially outward portion of the leading edge entering and exiting a footprint contact patch prior to the axially inner portion of the leading edge of the shoulder tread elements. The leading edges of one row of shoulder elements may be oriented equally, but oppositely directed, relative to the leading edges of the other row. The leading edge of the shoulder tread elements may be inclined greater than 0 degrees or 10 degrees or greater relative to a plane perpendicular to the center plane of the tire. The pneumatic tire may have a non-directional tread pattern wherein both rows of shoulder tread elements are directionally oriented in the same direction. The tread pattern may be directional having equal, but oppositely oriented, shoulder tread elements. The leading edges of each shoulder element may be equally oriented and the leading edge of each shoulder element may be inclined at an angle of 10 degrees or greater relative to a plane perpendicular to a center plane of the tire.

Another pneumatic tire may have a directional tread pattern wherein the plurality of tread elements extend across the width of the tread between the lateral edges and include central tread elements and shoulder tread elements with each tread element having a leading edge and a trailing edge. A first line may extend along the leading edges of laterally adjacent central tread elements and have a generally "V" like or chevron shape laterally inward of the lateral edges extending to an apex where the apex of the "V" or chevron first enters a contact patch of the tire as it rotates in a forward direction prior to the remaining portions of the leading edges. The shoulder tread elements may be arranged in two circumferential rows, one adjacent each lateral edge, with the leading edges having an inclination directionally opposite to the leading edges of the central tread elements. A second line may extend along the leading edge of the shoulder elements and may be connected to the first line. Axially outer portions of the leading tread edge of each shoulder element may enter the contact patch prior to an axially inner portion of the leading edge of the shoulder elements. Upon exiting the contact patch, the axially outer portions of the shoulder elements may exit prior to the axially inner portions while the central tread elements may have the apex and axially inner portions of the central tread elements exit the central patch prior to axially outer portions. The directional tread may be symmetric or asymmetric about the center plane of the tread.

### Summary of the Invention

The invention relates to a tire in accordance with claim 1.

Dependent claims relate to preferred embodiments of the invention.

A pneumatic tire in accordance with the present invention has a radially outer tread. The tread has a plurality of circumferential grooves, a plurality of lateral grooves, and a plurality of shoulder grooves. The tread includes bottoms and/or sides of each circumferential groove being partially or fully textured for improving snow traction, bottoms and/or sides of each lateral groove being partially or fully textured for improving snow traction, and bottoms and/or sides of each shoulder groove being partially or fully textured for improving snow traction.
In one embodiment of the present invention has a radially outer tread, the tread has a plurality of circumferential grooves, a plurality of lateral grooves, and a plurality of shoulder grooves. The tread includes bottoms only of each circumferential groove being partially or fully textured for improving snow traction, bottoms only of each lateral groove being partially or fully textured for improving snow traction, and bottoms only of each shoulder groove being partially or fully textured for improving snow traction.

In one embodiment of the present invention has a radially outer tread, the tread has a plurality of circumferential grooves, a plurality of lateral grooves, and a plurality of shoulder grooves. The tread includes sides only of each circumferential groove being partially or fully textured for improving snow traction, sides only of each lateral groove being partially or fully textured for improving snow traction, and sides only of each shoulder groove being partially or fully textured for improving snow traction.

According to one aspect of the pneumatic tire, the tread may have a non-directional tread pattern wherein leading edges of one row of shoulder elements are oriented equal, but oppositely directed, relative to leading edges of another row.

According to still another aspect of the pneumatic tire, a leading edge of the shoulder tread elements may be inclined 10 degrees or greater relative to a plane perpendicular to an equatorial center plane of the pneumatic tire.

According to yet another aspect of the pneumatic tire, the tread may have a directional tread pattern wherein rows of shoulder tread elements are directionally oriented in the same direction.

According to still another aspect of the pneumatic tire, a leading edge of a shoulder element may be inclined at an angle of 10 degrees or greater relative to a plane perpendicular to an equatorial center plane of the pneumatic tire.

According to yet another aspect of the pneumatic tire, the leading edge of the shoulder element may be equally oriented another leading edge of another shoulder element.

According to still another aspect of the pneumatic tire, the tread has an equatorial center plane and may have an apex of a "V" or chevron shape which is centered on the equatorial center plane.

According to yet another aspect of the pneumatic tire, the tread may be asymmetrical and may have an apex of a "V" or chevron shape lying between a row of shoulder elements and an equatorial center plane of the tread.

According to still another aspect of the pneumatic tire, a leading edge of a shoulder elements may be inclined at an angle of 10 degrees or greater relative to a laterally extending line perpendicular to an equatorial center plane of the tread.

According to a preferred aspect of the invention, the grooves are textured with concave adjacent arcs.

According to a preferred aspect of the invention, the grooves are textured with concave adjacent spherical surfaces.

According to one aspect of the invention, textured sections of the bottom of at least one circumferential groove or of all circumferential grooves alternate in the circumferential direction with non-textured or smooth sections of the bottom of said at least one circumferential groove or of said all circumferential grooves; and/or textured sections of the sides of at least one circumferential groove or of all circumferential grooves alternate in the circumferential direction with non-textured or smooth sections of the sides of said at least one circumferential groove or of said all circumferential grooves.

According to one aspect of the invention, the sides of said circumferential groove and/or said lateral grooves and/or said shoulder groove may be only partially textured, in particular along the radial direction of the respective groove side.

According to one aspect of the invention, the tread may comprise a plurality of circumferential rows of shoulder tread elements wherein the leading edges of said shoulder tread elements are inclined 10 degrees or greater, preferably 10 degrees to 30 degrees or 10 degrees to 20 degrees, relative to a plane perpendicular to the equatorial center plane of the pneumatic tire, and, optionally, wherein the leading edge of one shoulder tread element is equally oriented compared to the leading edge of another shoulder tread element.

According to one aspect of the invention, the tread may have a non-directional tread pattern and may comprise a plurality of circumferential rows of shoulder tread elements wherein the leading edges of the shoulder tread elements of one circumferential row are oriented equal, but oppositely directed, relative to the leading edges of the shoulder tread elements of another circumferential row.

According to a preferred aspect of the invention, the circumferential grooves and/or said lateral grooves and/or said shoulder groove are textured with concave adjacent arcs or adjacent spherical surfaces. They may also be textured with adjacent facet structures, adjacent dimple structures, adjacent pyramid structures or may be irregularly textured.

According to a preferred aspect of the invention, the circumferential grooves and/or the lateral grooves and/or the shoulder groove are preferably fully or only partially textured with a surface texture having a Rₐ-value in a range of from 10 µm to 500 µm, alternatively 20 µm to 200 µm or 50 µm to 150 µm, with Ra being the arithmetic roughness average as determined in accordance with DIN EN ISO 4287:2010.

Preferably, the tire is a winter or snow tire being marked M+S in accordance with EU directive 92/23/EEC.

### Definitions

The following definitions are controlling for the disclosed invention.

"Axial" and "Axially" means the lines or directions that are parallel to the axis of rotation of the tire.

"Axially Inward" means in an axial direction toward the equatorial plane.

"Axially Outward" means in an axial direction away from the equatorial plane.

"Circumferential" most often means circular lines or directions extending along the perimeter of the surface of the annular tread perpendicular to the axial direction; it can also refer to the direction of the sets of adjacent circular curves whose radii define the axial curvature of the tread, as viewed in cross section.

"Directional Tread Pattern" means a tread pattern designed for specific direction of rotation.

"Equatorial Plane" means the plane perpendicular to the tire's axis of rotation and passing through the center of its tread; or the plane containing the circumferential centerline of the tread.

"Footprint" means the contact patch or area of contact of the tire tread with a flat surface under normal load pressure and speed conditions.

"Groove" means an elongated void area in a tread that may extend circumferentially or laterally in the tread in a straight, curved or zigzag manner. It is understood that all groove widths are measured perpendicular to the centerline of the groove.

"Lateral" means a direction going from one sidewall of the tire towards the other sidewall of the tire.

"Net to gross" means the ratio of the net ground contacting tread surface to the gross area of the tread including the ground contacting tread surface and void spaces comprising grooves, notches and sipes.

"Notch" means a void area of limited length that may be used to modify the variation of net to gross void area at the edges of blocks.

"Radial" and "radially" mean directions radially toward or away from the axis of rotation of the tire.

"Shoulder" means the upper portion of sidewall just below the tread edge.

"Sidewall" means that portion of a tire between the tread and the bead.

"Sipe" means a groove having a width in the range of 0.2% to 0.8% of the tread width. Sipes are typically formed by steel blades having a 0.4 to 1.6 mm, inserted into a cast or machined mold.

"Tangential" and "Tangentially" refer to segments of circular curves that intersect at a point through which can be drawn a single line that is mutually tangential to both circular segments.

"Tread" means the ground contacting portion of a tire.

"Tread width" (TW) means the greatest axial distance across the tread, when measured (using a footprint of a tire,) laterally from shoulder to shoulder edge, when mounted on the design rim and subjected to a specified load and when inflated to a specified inflation pressure for said load.

"Void Space" means areas of the tread surface comprising grooves, notches and sipes.

### Brief Description of the Drawings

The present invention will be described by way of example and with reference to the accompanying drawings, in which:
FIG. 1 is a schematic exemplary tire tread contact patch under normal load and inflation.
FIG. 2 is the schematic exemplary contact patch of Fig. 1 showing the contact patch at 50 percent load under normal inflation. Both Figs. 1 and 2 provide illustrations for defining how footprint shape factors may be measured.
FIG. 3 is a schematic exemplary portion of a directional tread pattern.
FIG. 4 is a schematic exemplary portion of another directional tread pattern.
FIG. 4A is a plan view of a tire employing the tread shown in Fig. 4.
FIG. 5 is a schematic exemplary portion of another directional tread pattern.
FIG. 6 is a schematic exemplary portion of a non-directional tread pattern.
FIG. 7 shows a schematic example tread in accordance with the present invention.
FIG. 8 shows another schematic example tread in accordance with the present invention.
FIG. 9 shows still another schematic example tread in accordance with the present invention.
FIG. 10 shows a schematic example texturing or roughness of concave adjacent arcs in accordance with the present invention.
FIG. 11 shows the texturing of Fig. 10 from another perspective.
FIG. 12 shows another schematic example texturing or roughness of convex adjacent arcs in accordance with the present invention.
FIG. 13 shows still another schematic example texturing or roughness of concave adjacent spherical surfaces in accordance with the present invention.
FIG. 14 shows yet another schematic example texturing or roughness of convex adjacent spherical surfaces in accordance with the present invention.

### Detailed Description of Example Embodiments of the Present Invention

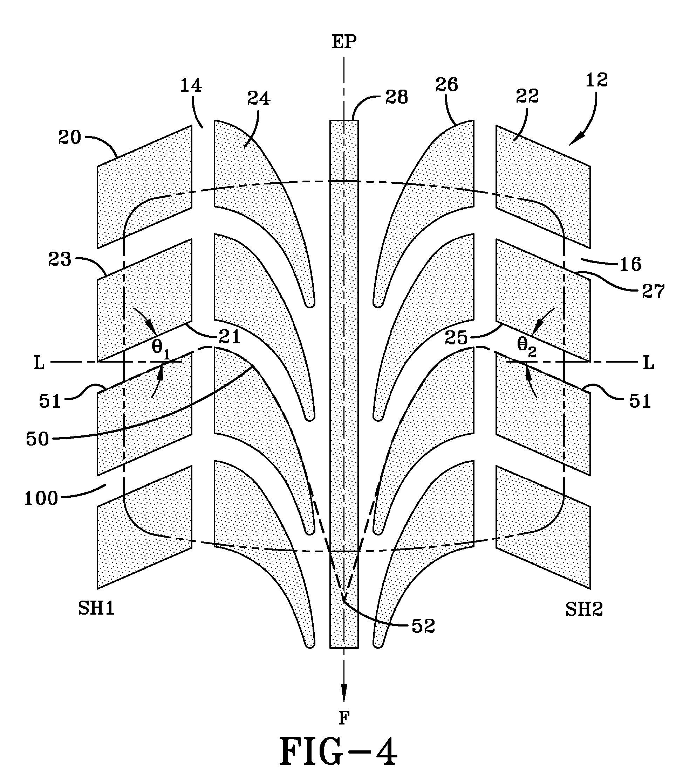

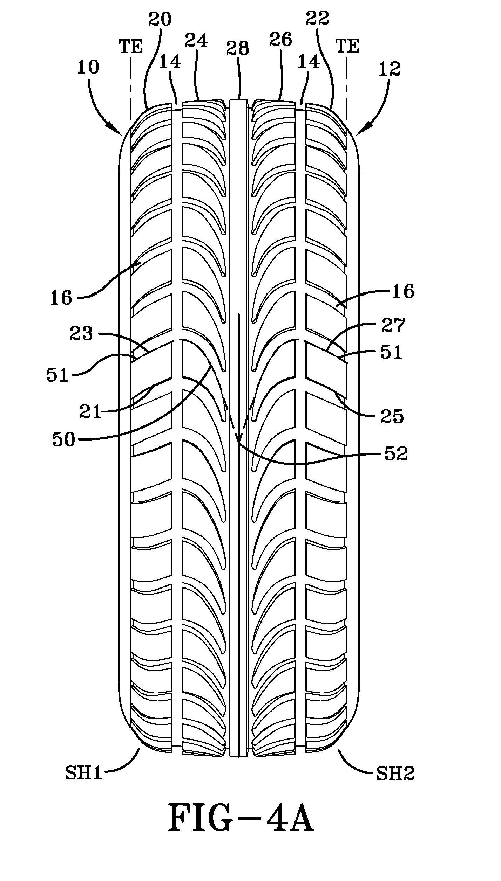

With reference to Fig. 4A, an example pneumatic passenger or light truck tire 10 has a tread 12 which has a plurality of tread elements defined by grooves extending circumferentially and laterally around the tread between a pair of lateral tread edges TE to define a tread pattern. Such a tire may be inflated to pressures under normal load in a range of 193000 Pa (28 psi) to 310000 Pa (45 psi). At these pressures, when the tire is lightly loaded, heel and toe wear may occur. By comparison, a heavy duty truck or bus tire may operate at inflated pressures of 552000 Pa (80 psi) to 827000 Pa (120 psi) at much higher loads. This tire may avoid heel and toe wear by using shoulder ribs for highway and paved road usage. Some tires may have block elements in the shoulders on rear drive tires, but front steer tires may have circumferentially continuous ribs to avoid vibration and tread wear issues.

As shown in Figs. 4 and 4A, the tread 12has have a plurality of tread elements extending across the width of the tread between the lateral edges TE including central tread elements 24, 26, 28. Tread elements 24, 26 are identically shaped, but oppositely oriented. Tread element 28 is a central rib circumferentially continuous and extending about the circumference of the tire. The tread 12 further has a pair of shoulder tread elements arranged in rows. The first row SH1 is defined by tread elements 20. The second row SH2 is defined by tread elements 22. The shapes and orientation of these shoulder elements 20, 22 are further be defined by circumferential grooves 14 on each half of the tread 12, as well as curved lateral grooves 16 extending from a tread edge TE to the center portion of the tread, as shown. These grooves 16 are curved in shape and extend along a line 50 from an apex 52 to the center of the tread element extending outwardly across the tread pattern changing direction along a second line 50 adjacent the shoulder tread elements 20, 22 and flow over the tread edge TE. The shoulder tread elements 20 each have a leading edge 21 and a trailing edge 23, while the shoulder elements 22 have a leading edge 25 and a trailing edge 27.

With further reference to Fig. 4, a footprint of a portion of the tread 12 is shown. It has a contact patch or footprint 100 as shown in a generally rectangular dashed line. This footprint shape or contact patch shape is preferably generally square. A square footprint has a footprint shape factor F of approximately 1.25 or less. A more rounded footprint has a shape factor of 1.5 or more. In this case, the central region may have been substantially longer in length while the lateral edges of the footprint may be shorter in length thereby creating an oval shape of the footprint.

The leading edge 21 of each shoulder element 20 in the first shoulder region SH1 have an angle θ₁, θ₁ of the leading edge as shown by a straight line angle with the angle being measured from a perpendicular of the equatorial plane EP of the tire. The perpendicular line L may extend as either a line or a plane intersecting perpendicular to the equatorial plane EP. The angle θ₁, as shown in the exemplary tire 10, may be 10 degrees or greater. On the opposite side of the tire 10, the shoulder row SH2 has tread elements 22 with the leading edge 25 exhibiting an angle θ₂. The angle θ₂, as measured from the line L to the leading edge 25 is equal, but opposite, to the angle θ₁ on the opposite shoulder. The axially outer portions at the leading and trailing edges 25, 27 both enter and exit the contact patch 100 prior to the axially inner portions of the leading and trailing edges. As the tire 10 rotates, the outer portions of the tread 12 first come into contact with the contact patch 100. As the tire 10 continues to rotate, this leading axially outer portion of either the trailing or leading edges 25, 27 exits first, while the axially inner portions of the leading and trailing edges enter or leave the contact patch 100 following these axially outer portions. The axially extending grooves 16 have a width of at least 1.5 mm (0.060 inches), as defined by measuring perpendicularly between the leading and the trailing edges 25, 27. This width allows the grooves 16 to remain open as they pass through the footprint 100 of the tire 10. This should not to be confused with a sipe, incision, or other narrow groove which may tend to close up as the tire 10 enters or leaves the footprint 100 of the tire. Thus, the leading and trailing edges 25, 27 are not be supported by an adjacent element nor experience other influences regarding normal heel and toe wear.

All season tires preferably have these lateral grooves 16 extending at approximately 0 degrees relative to the line L. Hence, these lateral grooves 16 are preferably oriented at approximately 0 degrees. However, 0 degrees may not be an optimum orientation for the leading or trailing edges 25, 27 of the shoulder block elements 20, 22. Heel and toe wear may occur at this orientation. In some tread patterns similar to Fig. 4, the lateral groove 16 may flare out and continue a flow pattern opposite to the direction of forward travel thereby ejecting water outward and not directing water back towards the center of the tread 12. This may increase heel and toe wear and cause abrasion on leading and trailing edges 25, 27 of the shoulder block elements 20, 22.

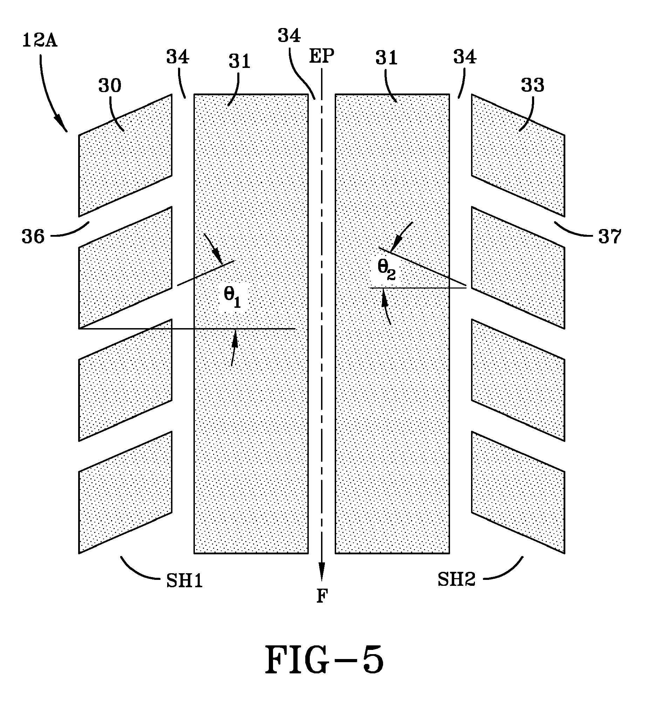

These lateral grooves 16 may flow over the shoulder but actually changes its orientation as it approaches the shoulder such that the grooves are oriented in a fashion that is opposite to the more central regions of the tread elements 24, 26. This does not create a pushing of the water under wet traction conditions towards the center portion of the tread 12. However, the shoulder tread elements 20, 22 may be oriented such that the angle θ₁ and θ₂ may be as illustrated in Figs. 4, 4A, and 5. These orientations, while inclined such that the axially outer portions of the tread elements 20, 22 enter and leave the contact patch 100 first, prior to the remaining axially inner portions of the shoulder tread elements, may mitigate heel and toe wear. Additionally, traction and traction performance of the tire 10 may be maintained.

With reference to Fig. 5, a tread pattern 12A is similar to the tread pattern Fig. 4 with the exception that the center tread elements may be ribs 31 spaced by circumferentially continuous grooves 34. The angles θ₁ and θ₂ may be equal, but oppositely oriented relative, to the circumferential center plane or equatorial plane EP of the tire. The tread element 30 in the shoulder row SH1 are spaced by inclined grooves 36 intersecting the circumferential grooves 34. On the opposite side, shoulder row SH2 has lateral grooves 37 defining the tread elements 33. As discussed, the orientation of the leading and trailing edges may be equal, but opposite, such that an angle of inclination θ₁ exists on the shoulder row SH1 whereas an angle θ₂ equal, but opposite, exists on shoulder row SH2.

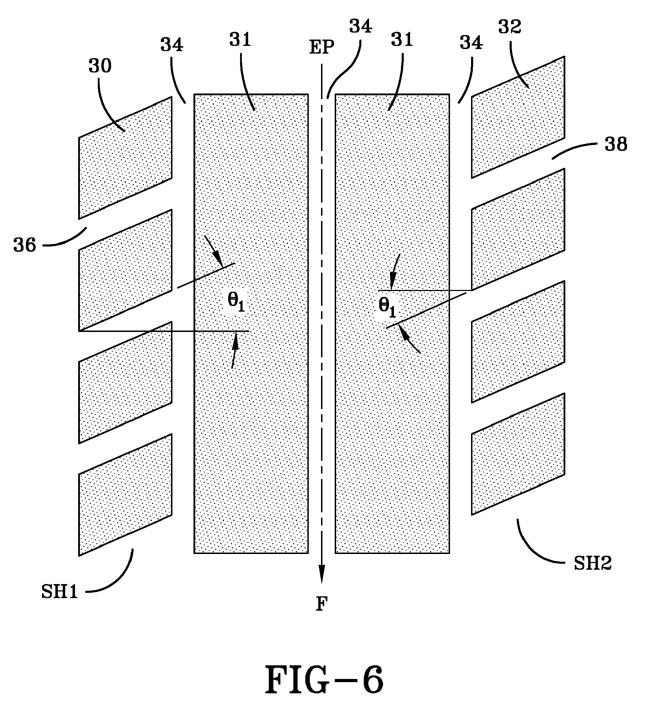

With reference to Fig. 6, a tread pattern is similar to the tread pattern Fig. 4 with the exception that the shoulder rows SH2 and the shoulder elements 32 are defined by lateral grooves 38 which intersect the circumferential grooves 34. In this case, both the shoulder elements SH1, SH2 have their leading and trailing edges of the shoulder elements inclined at an angle θ₁, since both of the lateral grooves 38 extend in the same direction with the same orientation relative to the equatorial plane of the tire. The above tread features have been disclosed by US-B-8,261,790.

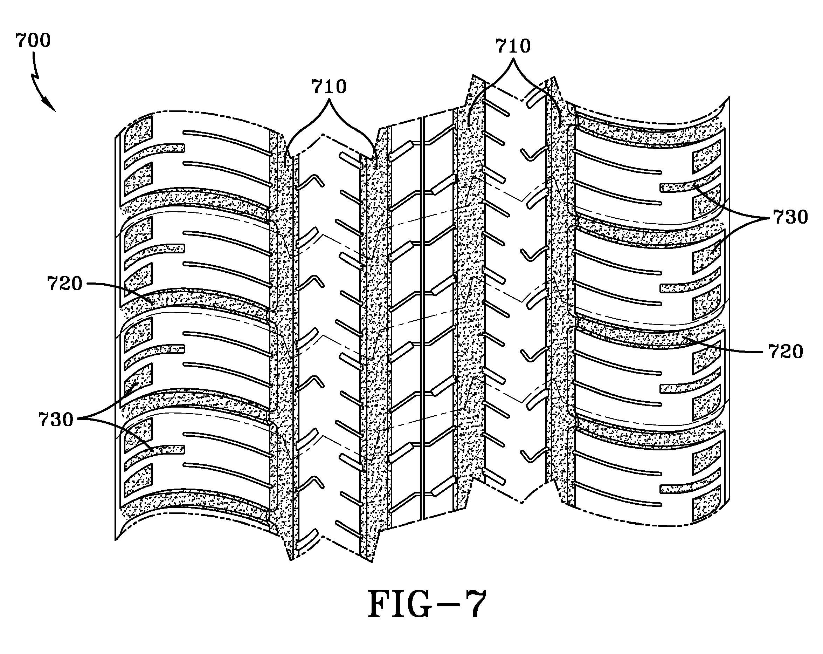

As shown in Figs. 7-14 and in accordance with the invention, texturing is added to circumferential grooves and lateral grooves of the tire tread to improve snow performance. As discussed above, it may be difficult to achieve snow performance improvement on winter or all season tires without affecting other performances at the same time. However, the unique geometry of the present invention is based on the tool path needed to manufacture the tire to create a texture which more closely matches the granularity of snow to better capture and grab the snow in the tires main circumferential grooves to improve the "snow-on-snow" shear for improved snow traction. Hence, the texture in accordance with the invention preferably has a granularity essentially corresponding to the granularity of snow to better capture and grab the snow in the tire's grooves and in particular in the tire's main circumferential grooves to thereby improve the "snow-on-snow" shear for improved snow traction.

This texture is preferably applied at least to the main circumferential grooves of a tire tread. The texture may cover the base of the grooves, and completely or partially extend up the sides of the grooves. The texture may be placed only in the main circumferential grooves where the most snow compaction occurs and where it will not impact other performances. Conventionally, "smooth" or "polished" grooves have been used to expel slush and snow. The texture of the present invention acts oppositely, attracting and capturing snow to provide additional traction. The use of typical all season or winter compounds and the need for increased stiffness of the tread cap compound for good wet performance may negatively affect snow performance. Relying on the tread compound only to improve snow performance may hence trade-off wet performance.

The use of surface roughness or texturing in the main circumferential grooves and/or on partial surfaces of the tread blocks or groove wall does preferably not wear away over time. Thus, wet performance is not negatively affected with wider and shallower grooves being textured to improve snow traction.

Fig. 7 shows an example tread 700 in accordance with the present invention. The tread 700 has texturing or roughness added to the bottoms and sides of the circumferential grooves 710, the lateral grooves 720, and the shoulder grooves 730. Preferably, the grooves 710, 720, 730 are designed such in terms of their width that they remain at least partially open when the tire enters or leaves the footprint of the tire.

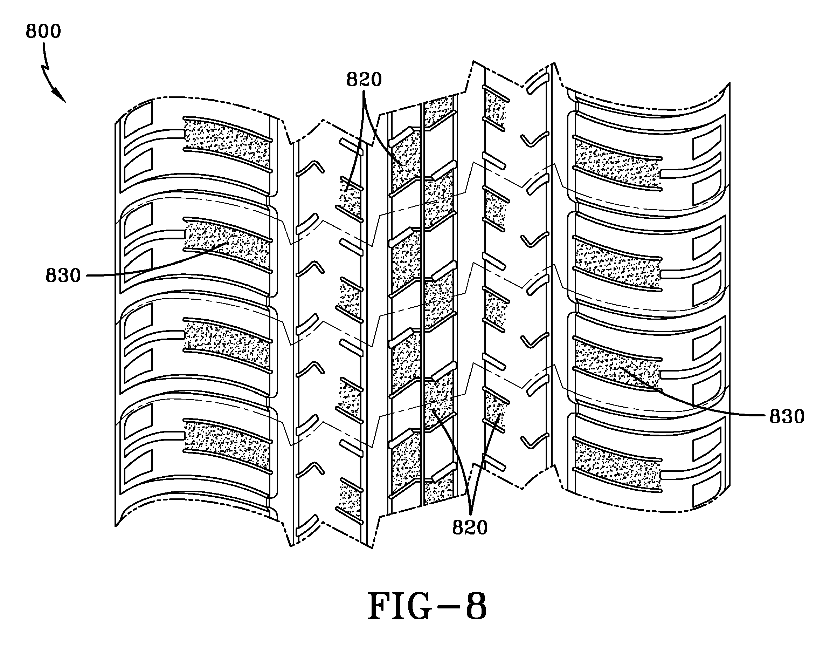

Fig. 8 shows another example tread 800 in accordance with the present invention. The tread 800 has texturing or roughness added to selected areas of the tread, such as the bottoms of lateral grooves 820 and shoulder and shoulder grooves 830. Again, the grooves 820, 830 are preferably designed such in terms of their width that they remain at least partially open when the tire enters or leaves the footprint of the tire.

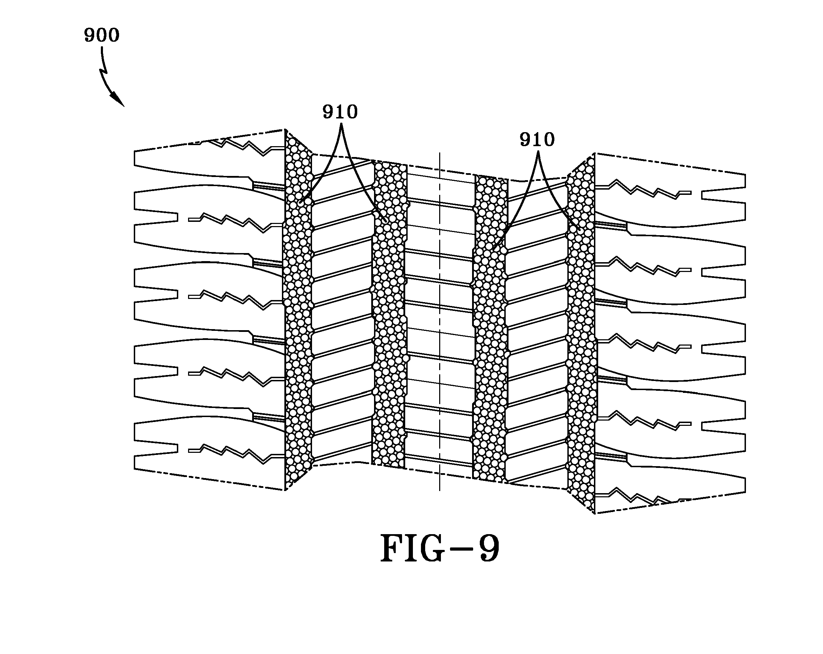

Fig. 9 shows still another example tread 900 in accordance with the present invention. The tread 900 has dimpled texturing or roughness added to the bottoms and sides of the circumferential grooves 910. Again, the grooves 820, 830 are preferably designed such in terms of their width that they remain at least partially open when the tire enters or leaves the footprint of the tire.

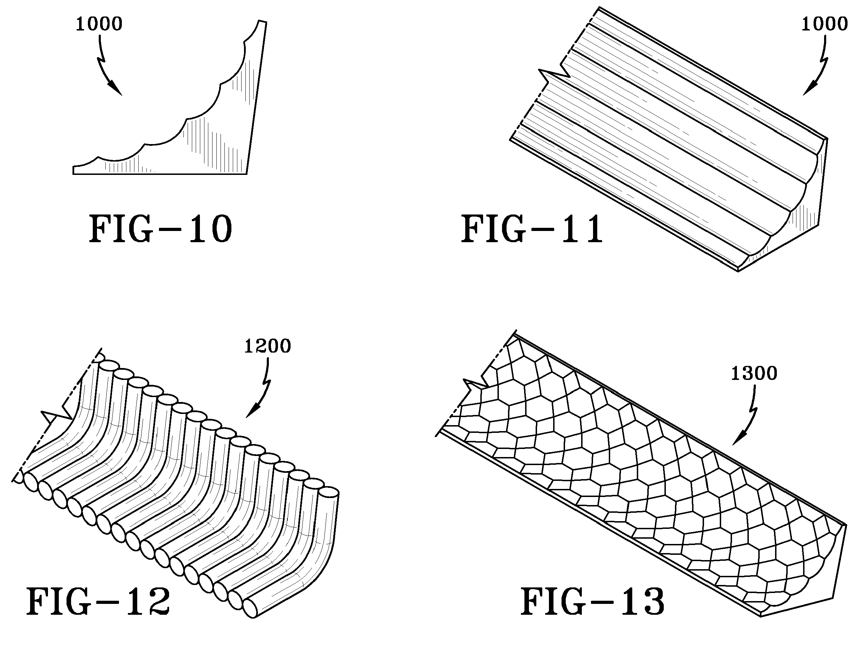

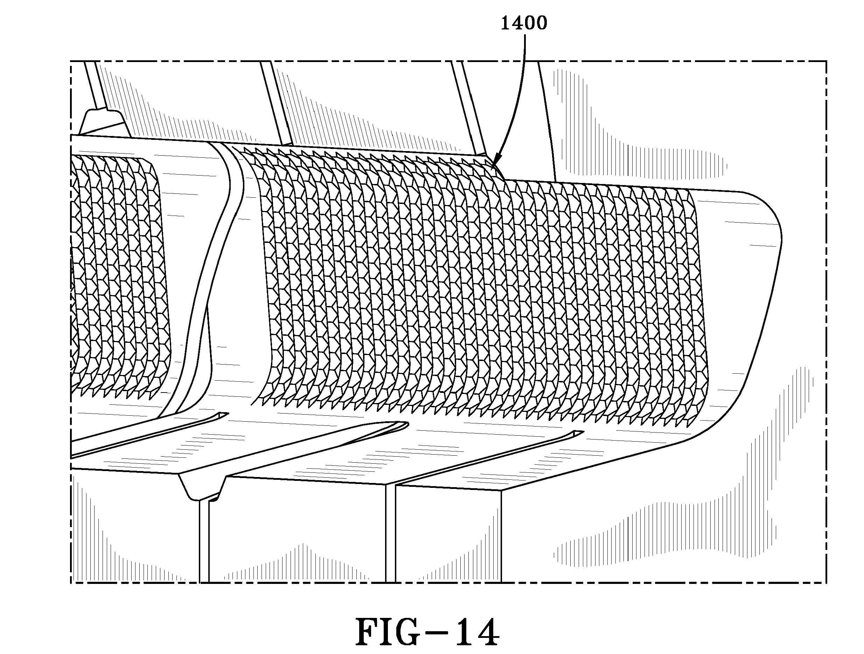

Fig. 10 shows an example texturing or roughness 1000 of concave adjacent arcs in accordance with the present invention. Fig. 11 shows the texturing of Fig. 10 from another perspective. Fig. 12 shows another example texturing or roughness 1200 of convex adjacent arcs in accordance with the present invention. Fig. 13 shows still another example texturing or roughness 1300 of concave adjacent spherical surfaces in accordance with the present invention. Fig. 14 shows yet another example texturing or roughness 1400 of convex adjacent spherical surfaces (similar to Fig. 9) in accordance with the present invention.

## Claims

1. A pneumatic tire having a radially outer tread (700, 800, 900), the tread having a plurality of circumferential grooves (710, 910), a plurality of lateral grooves (720, 820), and a plurality of shoulder grooves (730, 830), wherein
the bottom and the sides, only the bottom or only the sides of each circumferential groove (710, 910) are partially or fully textured;
the bottom and the sides, only the bottom or only the sides of each lateral groove (720, 820) are partially or fully textured; and
the bottom and the sides, only the bottom or only the sides of each shoulder groove (730, 830) are partially or fully textured.

2. The pneumatic tire of claim 1 wherein
the bottom and the sides of each circumferential groove (710, 910) are partially or fully textured;
the bottom and the sides of each lateral groove (720, 820) are partially or fully textured; and
the bottom and the sides of each shoulder groove (730, 830) are partially or fully textured.

3. The pneumatic tire of claim 1 wherein
only the bottom and not the sides of each circumferential groove (710, 910) are partially or fully textured;
only the bottom and not the sides of each lateral groove (720, 820) are partially or fully textured; and
only the bottom and not the sides of each shoulder groove (730, 830) are partially or fully textured.

4. The pneumatic tire of claim 1 wherein
only the sides and not the bottom of each circumferential groove (710, 910) are partially or fully textured;
only the sides and not the bottom of each lateral groove (720, 820) are partially or fully textured; and
only the sides and not the bottom of each shoulder groove (730, 830) are partially or fully textured.

5. The pneumatic tire as set forth in at least one of the previous claims wherein textured sections of the bottom of at least one circumferential groove or of all circumferential grooves alternate in the circumferential direction with non-textured or smooth sections of the bottom of said at least one circumferential groove or of said all circumferential grooves; and/or wherein textured sections of the sides of at least one circumferential groove or of all circumferential grooves alternate in the circumferential direction with non-textured or smooth sections of the sides of said at least one circumferential groove or of said all circumferential grooves.

6. The pneumatic tire as set forth in at least one of the previous claims wherein the sides of said circumferential groove and/or said lateral grooves and/or said shoulder groove (730, 830) are only partially textured, in particular along the radial direction of the respective groove side.

7. The pneumatic tire as set forth in at least one of the previous claims wherein the tread has a directional tread pattern and comprises circumferential rows of shoulder tread elements which are directionally oriented in the same direction.

8. The pneumatic tire as set forth in at least one of the previous claims wherein the tread (700, 800, 900) comprises a plurality of circumferential rows of shoulder tread elements and wherein the leading edges of said shoulder tread elements are inclined 10 degrees or greater, preferably 10 degrees to 30 degrees or 10 degrees to 20 degrees, relative to a plane perpendicular to the equatorial center plane of the pneumatic tire, and, optionally, wherein the leading edge of one shoulder tread element is equally oriented compared to the leading edge of another shoulder tread element.

9. The pneumatic tire as set forth in at least one of the previous claims wherein the tread (700, 800, 900) has a non-directional tread pattern and comprises a plurality of circumferential rows of shoulder tread elements and wherein the leading edges of the shoulder tread elements of one circumferential row are oriented equal, but oppositely directed, relative to the leading edges of the shoulder tread elements of another circumferential row.

10. The pneumatic tire as set forth in at least one of the previous claims wherein the tread (700, 800, 900) has an equatorial center plane, wherein the tread comprises a plurality of tread elements or apexes of a "V"-shape or a chevron shape and wherein said plurality of tread elements or apexes are centered on the equatorial center plane.

11. The pneumatic tire as set forth in at least one of the previous claims wherein the tread (700, 800, 900) is asymmetrical, wherein the tread comprises a plurality of tread elements or apexes of a "V"-shape or a chevron shape and wherein said plurality of tread elements or apexes are lying between a circumferential row of shoulder tread elements and an equatorial center plane of the tread.

12. The pneumatic tire as set forth in at least one of the previous claims wherein leading edges of shoulder tread elements are inclined at an angle of 10 degrees or greater, preferably 10 degrees to 30 degrees or 10 degrees to 20 degrees, relative to a laterally extending line perpendicular to an equatorial center plane of the tread.

13. The pneumatic tire as set forth in at least one of the previous claims wherein said circumferential grooves and/or said lateral grooves and/or said shoulder groove are textured with concave adjacent arcs, adjacent spherical surfaces, adjacent facet structures, adjacent dimple structures, adjacent pyramid structures or are irregularly textured.

14. The pneumatic tire as set forth in at least one of the previous claims wherein said circumferential grooves and/or said lateral grooves and/or said shoulder groove are textured with a surface texture having a Rₐ-value in a range of from 10 µm to 500 µm, alternatively 20 µm to 200 µm or 50 µm to 150 µm, with Ra being the arithmetic roughness average as determined in accordance with DIN EN ISO 4287:2010.

15. The pneumatic tire as set forth in at least one of the previous claims wherein the tire is a winter or snow tire being marked M+S in accordance with EU directive 92/23/EEC.
